## Europäisches Patentamt
## European Patent Office
## Office européen des brevets

(19)

(11) Publication number: **0 201 909**

**A2**

(12) # EUROPEAN PATENT APPLICATION

(21) Application number: **86106463.2**

(22) Date of filing: **13.05.86**

(51) Int. Cl.⁴: **G 06 K 9/00**
**G 06 K 9/36, G 06 F 15/62**

(30) Priority: **14.05.85 ES 543715**

(43) Date of publication of application:
**20.11.86 Bulletin 86/47**

(84) Designated Contracting States:
**AT BE CH DE FR GB IT LI LU NL SE**

(71) Applicant: **Intersoftware, S.A.**
**Borrell, 318**
**08021 Barcelona(ES)**

(72) Inventor: **Alvaro Alepus, Orestes**
**Lluis Sagnier, 59,50C**
**E-08032 Barcelona(ES)**

(72) Inventor: **Fabregat Guinot, Francesc**
**Po Font de la Mulassa, 21-23,4,1**
**E-08032 Barcelona(ES)**

(72) Inventor: **Serra Majem, Teresa**
**Po Font de la Mulassa, 21-23,4,1**
**E-08032 Barcelona(ES)**

(72) Inventor: **Cruanes Rafols, Esteve**
**Corcega, 168, 7o, 3**
**E-08036 Barcelona(ES)**

(72) Inventor: **Sole Pont, Jaume**
**Capitan Arenas, 25**
**E-08034 Barcelona(ES)**

(72) Inventor: **Olivella Cunill, Lluis**
**Diputacion 321, 2o, 1**
**E-08009 Barcelona(ES)**

(72) Inventor: **Garcia de Pedro, Enric**
**Urgell, 160, 1o**
**E-08036 Barcelona(ES)**

(74) Representative: **Becker, Thomas, Dr., Dipl.-Ing. et al,**
**Patentanwälte Becker & Pust Eisenhüttenstrasse 2**
**D-4030 Ratingen 1(DE)**

(54) **Procedure for automatic reading of images and device for carrying out this same procedure.**

(57) The invention relates to a procedure for the automatic reading of images and device to carry out the same, particularly applicable to the reading of images on any support, such as paper and includes transforming an image into a set of discrete electrical signals, storing them that constitute a digital image and performing a summation of pixels of the digital image.

FIG. 1.-

EP 0 201 909 A2

The invention described hereunder concerns a procedure for the automatic reading of images and a device to carry out this procedure, both of these being particularly suitable for the reading of images on any medium, such as paper, microfilm, video-disc, magnetic support, or any other, with separation on these images of the textual part, which may be written with any kind of letter, from the non-textual. The textual part is translated into a code suitable for subsequent computer processing.

The greater part of written information is presently to be found on a paper support. If it is desired to store this information in a computer, so that the space occupied is minimised and access facility is maximised, it is essential to read the text.

Various types of image reading machines are already known; these range from simple devices, like the bar code readers used with commercially available products, to the most sophisticated devices able to read handwritten characters. Between these two extremities, are to be found various types of reading machines of different characteristics and prices.

With respect to the invention, the gross input data shall be provided by a sweeping digitaliser, generically termed a "scanner", which examines the intensity of light transmitted by an area of the original document, called a pixel, converting this into a numerical value corresponding to the grey level observed. Using a predefined threshold, this number is converted into its binary value (0 if the pixel is sufficiently white and 1 if it is sufficiently black, or vice versa). This examination is carried out by

0201909

the scanner sequentially on all the pixels into which its visual field can be broken down; the resulting binary values are then located in order in a matrix which reproduces the tones of the image in numerical form. In this case, the size of the pixels has been chosen to be 0.1 by 0.1 mm.

With this level of resolution, the matrix corresponding to a page of a book, contains about four million pixels and by storing a pixel in one bit, about 0.5 megabytes will be required. A page of a newspaper, however, could occupy up to 3 megabytes.

The mere fact that such a volume of information has to be handled, is the first problem to be overcome by any computerised reading system.

By increasing the size of the pixel, the volume to be stored would be reduced, but it would result in serious impairment of the system features; it could only deal with characters that have sufficiently large and dense parameters.

Another problem that arises is that of segmentation, i.e. the location of the lines in a text of an image. For this it is sufficient to find the matrix rows that are filled with zeros; however, if, on locating the original document before the scanner, it is rotated through an angle of sufficient size, sometimes a rotation of merely arctan (1/45) degrees is enough, the scanner could confuse two consecutive lines of text which were separated by only two pixels. Consequently the algorithm would group them as a single line of text and there would be no possibility of reading them.

The problem becomes even more serious for multiple column text, where each column can have its own angle (often opposing) because of errors in composing the page. In addition, the interlines between two columns may not coincide on the same matrix rows.

This type of problem can be made even worse. Boxes, capital letters and column rules with black ornamental lines, prevent the localisation of white rows in the matrix. In addition, neither the structure nor the use made of decorative elements is anticipated.

Another of the typical problems consists of the inclusion of photographs and graphs. Some of the methods already known first distinguish between the textual areas and the non-textual, while the procedure and the mechanism of the invention first locate the blocks of information and then discern the nature of the block.

Newspapers are a highly complicated type of material, in which all the difficulties mentioned above are manifest, plus others as yet not indicated, such as:

- At letter level, the presence of different families and any of their varieties, making use of bodies larger than 96 for capitals (headlines, cornices, etc.), and those of less than 6 for legend (small ads, photo text and titles, etc.).

- At line level, the variation in the body of the letters makes it impossible to predict the height of a line. Similarly, the line length may vary from a few millimeters in bleeder lines (only in poorly prepared compositions) to lines running the full width, particularly in titles and headlines.

- At the information level, it is impossible to have a preestablished format for news. Even when this can be divided up into headlines, titles, summary, main news story, illustrations, conclusion and footnote, none of the parts is essential and it is even frequently possible to find news where the story is the caption to the illustration. Moreover the layout of the different parts is not fixed, nor is the use made by the news item of the columns into which the newspaper columns are arranged.

- At page level, the paper and printing qualities may be very poor, consequently the very original may have a "noise" content, which will be added to that introduced by the digitizing elements. Similarly, the width of a page is sufficiently great for even a small rotation to produce deviations of a high absolute value. Also, frequent use is made of complicated decorative elements, particularly in advertising announcements.

The procedure and the mechanism described in this invention, completely obviate all these inconveniences and permit the fast, correct and efficient reading of newspaper pages and, consequently, of other printed originals offering less difficulty, at a speed of approximately one minute per normal sized newspaper page.

Basically, the process involved is characterised by comprising the operations of:

a) transforming an image into a set of discrete electrical signals, which constitute the digitised version or "digital image" of the image;

- 6 -

b) to store these discrete electrical signals constituting the digital image;

c) to carry out the summation of the pixels in the digital image, first in vertical alignment and then in horizontal alignment, in each compartment of a series of compartments into which the digital image is distributed or divided in a predetermined manner, for the purpose of determining the vertical and/or horizontal spaces providing the separation between the partial blocks of the image, e.g. blocks of text, in each of the aforementioned compartments, distinguishing by their composition and thickness those that correspond to spaces between text blocks or image blocks, or "inter-blocks";

d) to determine the coincidence or continuity of the interblock spaces of a compartment with those of the adjacent compartments, in bands of compartments, formed by rectangular groupings of a whole number of the said compartments;

e) to determine the lines belonging to each one of the blocks present in each band, reconstituting the lines that form part of two adjacent bands, separating from the process the lines that are too thick or the images that are not text;

f) to carry out the segmentation of each line, determining the situation of the central body of the line, this central body being the rectangular portion whose bases are respectively tangents to the upper and lower limits of the characters written in lower case, ignoring the extensions of these upwards or downwards and of the orthographic symbols;

g) to determine, line by line, the inclination of the central body thereof with respect to the horizontal, inserting a correction coefficient to equate this to a horizontal line;

h) to validate the line to determine if it is certainly a line of text, separating it otherwise from the process as unrecognisable either as image or as text;

i) to validate each character of each line;

j) to centre and normalise each character, within a rectangle of predetermined size; and

k) to recognise each character, deciding the probability that it pertains to a preestablished pattern.

Next, the machine for carrying out this procedure of the invention, is characterised in that it incorporates some transducing means which carry out the transformation of the optical image into the digital image; as well as a multimicrocomputer system provided with:

— a bulk memory in which the said digital image is stored;

— a main microcomputer, which has access to the bulk memory and makes use of the data stored in it;

— a set of microcomputers, termed topological, equal in number to the number of bands into which the optical image is divided; each of these microcomputers carries out the topological analysis of the band assigned to it, receiving the information already processed by the main microcomputer, which also controls the processing action of these microcomputers;

- a microcomputer for line processing, carrying out the segmentation and validation of the lines, the validation of the characters and the centralising and normalising of these;

- a daughter board connected to the said microcomputer for line processing, which at the request of the latter carries out certain tasks and informs the microcomputer of the results; and

- a series of character recognition elements.

In the procedure concerned with the invention, certain initial limitations have been assumed; among these is the stipulation that there will only be reading of dark text on a clear background and there will be reading of any type family, including typewriter and computer (fixed spacing), but not handwriting. The reason for this is that, generally, any document with desirable information will be printed.

In operations $\underline{a}$ to $\underline{e}$, an extraction process is carried out which gives as a result the lines of text descriptors for each of the blocks of information on the page. The structure of a line descriptor is as follows:

$$D(B,L) = \left(B, L, L_x = (x_1, \ldots, x_m), Ly\ (Y_1, \ldots, Ym)\right)$$

where,

B is the block number to which the line belongs

L is the line number within the block

$L_x$ and $L_y$ are the sets of coordinates.

Thus $(x_i, Y_i)$ is a point of a polygon surrounding the line, the coordinates being measured in pixels.

The analysis that decides whether the line holds text for processing or not, is done by means of another process carried out in operation $\underline{q}$.

An algorithm is obtained which divides the page into strips, each of which is applied to a corresponding processor that carries out the extraction task for that section, without there being any need for communication or synchronism between the processors. This fully parallel arrangement allows extremely high speeds to be reached. Since it can be implemented on a conventional multiprocessor architecture, it is possible to have a reasonable price and maintenance security.

In the attached drawings, an illustration is given by way of a non-limiting example of one way of putting this invention into practice.

Figure 1 shows a schematic diagram of how the scanner carries out the examination of an image and obtains the resulting binary values for all the pixels into which its visual field is broken down;

Figure 2 shows a general schematic of the mechanism according to the invention;

Figure 3 is a schematic of a daughter board of the line processing microcomputer; and

Figure 4 shows a schematic of an electronic circuit that forms part of some character recognition elements.

Scanner 1 has the job of digitising and passive detection of the pixel monotone segments that it finds in the rows that it sweeps. Image 2, the digitised form of real image 3, is loaded into bulk memory 4 of the system and the information on the segments of each band is inserted into the local memory of the corresponding microcomputer.

Each band topological microcomputer binds the segments together. Should there be any zone without connection, it calls for an exhaustive analysis in order to complete the connection or to surpress the unconnected elements definitively. This takes place in the operations $f$ and $q$ of the procedure of the invention.

Once the segments have been connected up, the line descriptors are obtained for each block. It is important to note that the blocks are not found first and then the lines, but the algorithm achieves the extraction of all the lines in a block in order without it being necessary to know the former beforehand.

As the microcomputer finds the line descriptors for its band, it forwards them to main microcomputer 5, which has the job of reconstituting the structure of the blocks and of sending the lines to the next process; it also reconstitutes the lines that may have been left between two bands.

According to a traditional scheme, in order to adequately locate the characters in a line of information, once it has been confirmed that the said line is text, the words are detected that conform it and the characters for each one of these; once the characters are isolated from the rest, they are sent to the character recognition elements formed by the microcomputer 6 and the character matrix recognition unit 7, along with a label of its position within the page, either absolute or ordinal within the line.

If it is found that it is not a line of text, but an image, this is given the suitable treatment for compacting and storing, or simply for recording its position and suppressing its content.

According to the procedure of this invention, the zone is segmented by means of simple algorithms, assuming from the outset that it is text and later analysing the result of this first segmentation. As will be seen below, the analysis is done on a basis of parameters that will be provided by the algorithm and which are decisive for the execution of the subsequent segmentation, if this has to take place. In this way a test is carried out with practically no time penalty. since its results are employed in the text segmentation. Obviously for non-text lines, it is relatively costly, but they are relatively infrequent in comparison with those lines that are of interest.

Having carried out, then, a first segmentation of the line, the text/non-text differentiation of these is done. If it concerns a line of text, a final segmentation is carried out in which the characters are segmented and validated. Next the normalisation and centering of each character is done; this consists in obtaining a copy on the largest possible scale of the image on a 16 x 16 grid, such that it is centered both vertically and horizontally. Finally a "pseudoimage vector" is obtained for the character, formed

0201909

by a selection of second degree elements taken from the normalised image; it is then necessary to recognise each one of these characters, by means of the microcomputers 6 and the character recognising matrix 7.

The most essential feature in this stage is speed, however the device described in this invention carries out character recognition at high speed.

Now, referring more specifically to the device described in this invention, scanner 1 is operated and controlled through interface board 8.

Bulk memory 4 stores binary image 2, encoded at bit level, i.e. each point in the image corresponds to one memory bit.

The said memory 4 is loaded from the start of the page reading process.

The main microcomputer 5 has, among others, the following missions:

- initialise the phases of system start-up and of loading for each page;

- check and control the status of the different microcomputers in all phases of the process;

- support interface 8, accepting a series of line commands;

- display totally and partially, loaded digital image 2; and

- remedy some errors without stopping the process.

Likewise, main microcomputer 5, as an element within the recognition process assembly, has the job of:

- all data transfers that involve bulk memory 4;

- initiate segmentation of those lines that belong to an already defined block, carrying out a reprocessing of these; and

- detect those descriptors of lines divided between two bands, uniting these into a single one.

Main microcomputer 5 participates in operations $\underline{a}$, $\underline{b}$, $\underline{c}$, $\underline{d}$, $\underline{e}$, $\underline{f}$, $\underline{q}$ and $\underline{h}$.

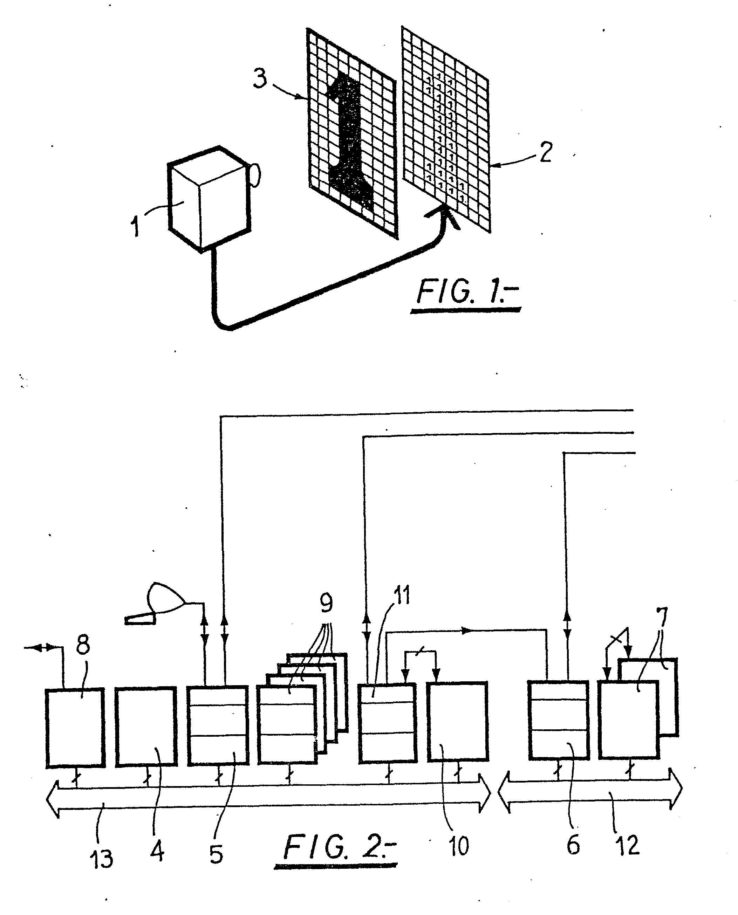

In figure 2, it can be seen that the device under discussion consists of a number of topological microcomputers 9, each of which has allocated to it a transversal band of the page, i.e. the corresponding memory zone, within bulk memory 4, belongs to them.

Basically, they are loaded sequentially with the monotone sequences detected and, when they have all those corresponding to their band, processing of this commences. From this zone, they have to extract the line descriptors, i.e. the coordinates of the polygon in bulk memory 4 in which the line in question is registered, and the block in the page to which it belongs.

Once the descriptors have been obtained, they are sent to the main microprocessor 5.

When this main microcomputer 5 decides the line descriptor is valid, it makes a request to auxiliary board 10 of the line processing microcomputer 11. The latter receives the request and the line data. Immediately afterwards, the auxiliary board 10 receives in its fast access working memory the image of the corresponding line, loaded from bulk memory 4 by main microcomputer 5. Once loading has been completed, the line processing microcomputer 11, assisted by the auxiliary board 10 mentioned, initiates line processing.

Microcomputer 11, for line processing, and auxiliary board 10, are also linked by local bus 12, such that calls and answers between the two take place over it.

This microcomputer 11 has three basic missions:

- to segment (if they exist) the line characters, i.e. remake the image corresponding to each one of the characters;

- Once the characters have been separated, to normalise each one of these against a fixed-size dot matrix; and

- to transmit the descriptors corresponding to the line characters;

In figure 2, it can also be seen that interface 8, bulk memory 4, main microcomputer 5, topological microcomputers 9, line processing microcomputer 11 and the auxiliary board 10, are connected through multibus 13.

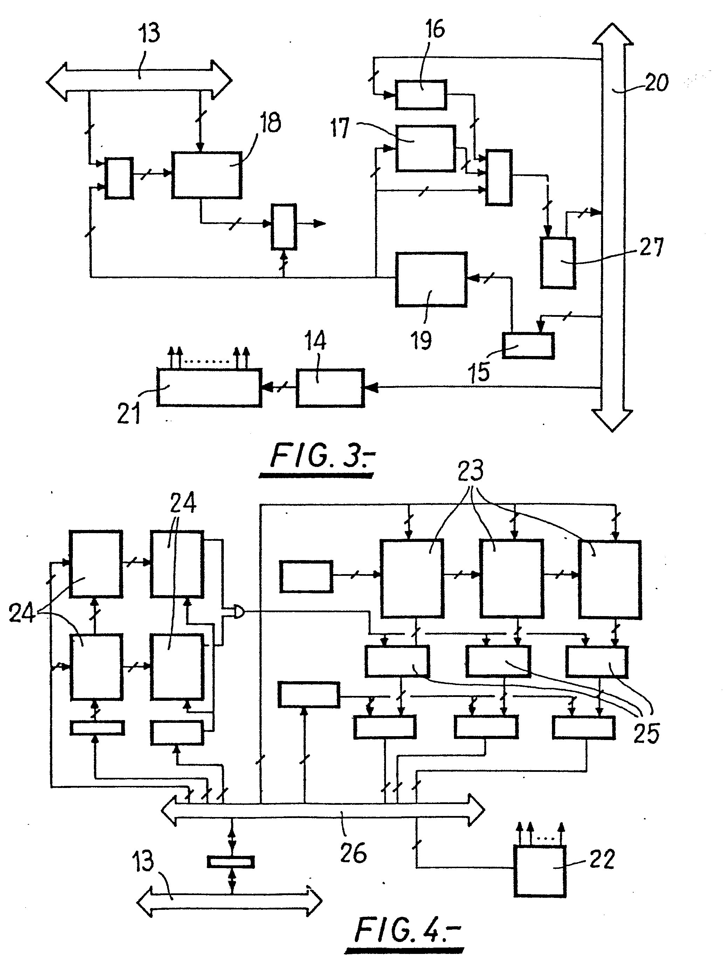

In figure 3, can be seen a schematic of the auxiliary board 10 of the line processing microprocessor 11, which is accessed through the latter and for which purpose it is equipped with some internal registers to carry out the following missions:

- register 14 is a single byte register in which the microcomputer 11 indicates to board 10 what function it has to carry out, from among a series of possible functions, in addition to indicating to it that a request has occurred.

- register 15 comprises four registers, each of 12 bits, in which the microcomputer 11 indicates to the board 10 the four coordinates of the rectangle within the descriptor of the line loaded, in which it is desired that the function described in the previous register be carried out.

- register 16 has one byte that serves to set a validity threshold for the calculations that board 10 has to carry out for some of its functions.

The results of the calls to the board, as well as their finalisation and status after the operation, are given through memory 27, which is jointly accessible through the microcomputer 11 and the board 10, in such a way that problems of mutual exclusion are resolved, as well as the possibility that memory 27 is left empty (reading suspended) or full (a write error is produced and the end of request).

The remaining modules carry out internal functions which have no interaction with the microcomputer 11 and which are as follows:

- Function 17 vertically delimits each character that is in a condition of minimum separation.

- Function 18 receives from bulk memory 5, via its interface with multibus 13, the image corresponding to the line to be segmented, validated by main microcomputer 5.

- Function 19 has the job of addressing the working memory constituted by function 18 within the rectangle marked by register 15, in the form that the requesting function decides.

The board also includes local bus 20.

This board 10 is required to obtain access quickly and consistently to the points that shape the text line loaded, to analyse its characteristics and detect the words that form it, and, in turn, to distinguish the characters that form these words. For this purpose, it basically offers the facility to carry out fast sweeps, both vertically and horizontally, and simultaneously perform recounts of favourable events in accordance with the function being carried out.

The most usual functions performed are:

- Histogramming
- Search for white or black columns
- Search for white or black rows
- Normalising. Once the character has been segmented, it has to be converted into a fixed-size dot matrix.

Board 10 also includes control unit 21, consisting of a microprogrammed sequencer; a high speed memory, in which is stored the digitised image of one line; a number of counters and comparators to obtain access in a predetermined manner to the said high speed memory; and a memory for temporary storage of the results, which holds these until such time as they are called for by the microcomputer 11 for line processing.

Figure 4 shows a schematic of the character matrix recognition unit, formed by an electronic circuit equipped with a control unit 22, a small memory 24, a large, high speed memory, and some multipliers 25.

The aforementioned character matrix recognition unit is shown in figure 1 with two boards 7, which are controlled and served by microcomputer 6. The matrix recognition unit receives the normalised character vector from the said computer 6. This vector is forwarded to boards 7 to await the result that will be received from these and decide whether the said character can be considered as recognised or not.

Four phases may be distinguished in the operation of the matrix recognition unit: the first is for initialising the recognition matrix and the set of characteristics, a second loads the normalised line vector for the line processor for recognition, a third for calculating the probabilities that each segmented character coincides with one of the characters in the source already stored in the device memory, and a fourth for displaying the results.

Finally, the operation of the device with respect to the procedure concerning the invention, may be summarised as follows:

the operations a and b are done by the scanner 1, the bulk memory 4 and the main microcomputer 5;

the operations c, d and e are carried out in the bulk memory 4 and the main microcomputer 5;

the operations $\underline{f}$ and $\underline{g}$, are carried out in bulk memory 4, the main microcomputer 5 and the topological microcomputer 9;

the operation $\underline{h}$ is executed in the main microcomputer 5;

the operations $\underline{i}$ and $\underline{j}$ are done in the microcomputer 11 for line processing and in auxiliary board 10; and

the operation $\underline{k}$ takes place in the recognition mechanism 6 and 7.

Having given sufficient description of the nature of the invention, as well as of the manner how to put it into practice, it is declared that all insofar as it does not alter, change or modify its fundamental principle, may be subject to variations in detail, being the essential.

May 12,1986

- 1 -

Intersoftware, S.A., 08021 Barcelona,
Spain, Borrell, 318

CLAIMS:

1. Procedure for the automatic reading of images and device to carry out the same, particularly applicable to the reading of images on any support, such as paper, microfilm, video disc, magnetic support or any other, separating in these images the part of text, which may be written in any kind of letter from the non-textual part and providing for the textual part its coded equivalent for subsequent computer processing, the procedure comprising the following steps

a) transforming an image into a set of discrete electrical signals, which constitute the digitized version or "digital image" of the image;

b) storing these discrete electrical signals that constitute the digital image;

c) performing a summation of pixels of the digital image, first in vertical lines and then in horizontal lines, in each compartment of a number of identical compartments into which the digital image is distributed or divided in a preestablished form, in order to determine the vertical and/or horizontal spaces that separate the partial blocks of the image from each other, e.g. text blocks, in each of said compartments, distinguishing by their composition and thickness the spaces that correspond to interlines from those that correspond to spaces between blocks of text of images, or "interblocks";

d) determining the coincidence or continuity of the interblock spaces of a compartment with those of the adjacent compartments, in bands of compartments, constituted by rectangular groupings of a whole number of the said compartments;

e) determining the lines belonging to each one of the blocks present in each band, reconstituting the lines that form part of two adjacent bands, separating from the process the lines that are too thick or the images that are not text;

f) carrying out the segmentation of each line, determining the situation of the central body of the line, this central body being the longitudinal, rectangular portion whose bases are respectively tangents to the upper and lower limits of the characters in lower case, ignoring their extensions upwards and/or downwards and the orthographical symbols;

g) determining line by line, the inclination of the central body of the line with respect to the horizontal, by introducing a correction coefficient to equate it to a horizontal line;

h) validating the line to ascertain if it is a line of text, separating it, if this is not the case, from the process as an item not recognised either as image or as text;

i) validating each character of each line;

j) centering and normalising each character, inserting it into a rectangle of a predetermined size; and

k) recognizing each character, determining the probalility that it pertains to a preestablished pattern.

2. Device for carrying out the procedure of claim 1, comprising transducing mechanisms (1), which carry out the transformation of the optical image (3) into the digital image (2); and a multimicrocomputer system equipped with:

    - a bulk memory (4), in which is stored said digital image (2),

    - a main microcomputer (5), which has access to the bulk memory (4) and makes use of the data contained therein;

- a number of microcomputer (9), described as topological, equal in number to the number of bands into which the optical image that is read is divided; each one of the said microcomputers carries out the topological analysis of its respective band, receiving the already processed information from the main computer (5), which also controls the process of these microcomputers (9);

- a microcomputer (11) for processing the lines, which carries out the segmentation and validation of the lines, the validation of the characters, and the centering and normalising of these;

- an auxiliary board (10) connected to said microcomputer (11) for the processing of the lines, which on the petition of the latter, carries out certain tasks and returns the results to it; and

- a series of character recognition devices (6,7).

3. Device according to claim 2, c h a r a c t e r i- z e d   i n   that said auxiliary board (10) comprises a control unit (21) consisting of a microprogrammed sequencer; a high speed memory in which is stored the digitised image of a line; a number of counters and comparators for accessing in a preestablished manner the said high speed memory; and a memory for temporary storage of results, where these are retained until such time as they are requested by the microcomputer for processing of the lines.

4. Device as in claim 2 oder 3, c h a r a c t e r i-
z e d  i n  that said character recognition mechanisms
(6, 7) comprises a microcomputer and a character
matrix recognition element, consisting of an electronic circuit equipped with a control unit (22),
a small memory (24), a large, high speed memory
and a set of multipliers (25).

5. Procedure for automatic reading of images on any
support, such as paper, with separating in these
images the textual part, which may be written in
any kind of letter, from the non-textual part and
providing for the textual part its coded equivalent
suitable for subsequent computer processing, the
procedure comprising the steps of:

a) transforming an image into a set of discrete electrical signals which constitute the digitized version
or "digital image" of the image;

b) storing the digital image;

c) dividing the digital image, in a preestablished
manner, into a number of identical compartments,
performing a summation, in each compartment, of
pixels of the digital image, first in a first direction
and then in a second direction, the first and second
directions being at an angle to each other, in order
to determine the vertical and/or horizontal spaces
that separate the partial blocks of the image from
each other, e.g. text blocks, in each of the said
compartmens, distinguishing by their composition
and thickness the spaces that correspond to interlines
from those that correspond to spaces between blocks
of text of images, or "interblocks";

d) forming bands of compartments, that is rectangular groupings of compartments, and determining the coincidence or continuity of the interblock spaces of a compartment with those of adjacent compartments in said bands of compartments;

e) determining the lines belonging to each of the blocks present in each band, reconstituting the lines that form part of two adjacent bands, separating from the process the lines that are too thick or the images that are not text;

f) carrying out the segmentation of each line, determining the situation of the central body of the line, this central body being the longitudinal, rectangular portion whose bases are respectively tangents to the upper and lower limits of the characters in lower case, ignoring their extensions upwards and/or downwards and the orthographical symbols;

g) determining line by line, the inclination of the central body of the line with respect to the horizontal, by introducing a correction coefficient to equate it to a horizontal line;

h) validating the line to ascertain if it is a line of text, separating it, if this is not the case, from the process as an item not recognised either as image or as text;

i) validating each character of each line;

j) centering and normalising each character, inserting it into a rectangle of a predetermined size; and

k) recognising each character, determining the probability that it pertains to a preestablished pattern.

6. Procedure as in claim 5, c h a r a c t e r i z e d i n that in step c) said first direction is the vertical direction and that said second direction is the horizontal direction.

7. Procedure as in one of claims 5 or 6, c h a r a c-t e r i z e d i n that said image is an optical image.

8. Device for automatic reading of images on any support, such as paper, microfilm, video disc, magnetic support or any other, comprising a transducing mechanisms (1) for transforming the image into a set of discrete electrical signals or "digital image", and further comprising a multi-computer-system equipped with:

- a storing device (4) for storing the ditigal image;

- a main computer (5) having access to the storing device (4) and making use of the data contained therein;

- a number of so called "topological" computing devices (9), equal in number to the number of bands into which the image is divided, for topologically analyzing the bands, each computing device (9) being assigned its respective band, and for receiving the already processed information from said main computer (5) which also controls the operation of said computing devices (9);

- a computing device (11) for processing lines in the digital image, said computing device (11) segmenting and validating said lines, validating characters in said lines, and centering and normalizing each character;

- an auxiliary device (10) connected to said computing device (11) for carrying out certain tasks requested  by said latter device (11) and returning the results to it;

- a plurality of character recognition devices (6, 7).

9. Device as in claim 8, c h a r a c t e r i z e d  i n   that said image is an optical image and said transducing mechanisms is an optical scanner (1).

10. Device as claimed in claims 8 or 9,  c h a r a c- t e r i z e d   i n   that said main computer and/or said topological computing device and/or said computing device is a microcomputer (5, 9, 11).

0201909

*FIG. 1.-*

*FIG. 2.-*

0201909

FIG.3.-

FIG.4.-